# EUROPEAN PATENT APPLICATION

(11) **EP 1 209 061 A2**
(43) Date of publication of application: **29.05.2002**
(21) Application number: 00311791.8
(22) Date of filing: 29.12.2000
(51) Int. Cl.: B62D 6/02

(54) **Repelling force apparatus for a power steering system of a vehicle**

(30) Priority: 28.11.2000 KR 2000071193
(71) Applicant: Mando Corporation, Pyungtaek-city, Kyunggi-do (KR)
(72) Inventor: Kim, Jae-Deok, Wonjoo-city, Kangwon-do (KR)
(74) Representative: Collingwood, Anthony Robert

(57) **Abstract**

A repelling force apparatus forming part of a power steering system for a vehicle is disclosed which is capable of obtaining various type linear and/or non-linear characteristics in a state that the characteristic of a valve is varied based on a running speed of a vehicle. The apparatus comprises an exciting coil, a permanent magnet and a pair of rotatable ferromagnetic members (200, 210) each having a plurality of teeth (202, 212) arranged in opposed relation, the teeth being of a trapezoid shape, and the sizes of the opposite surfaces of opposed teeth being different.

## Description

The present invention relates to a repelling force apparatus of a power steering system for a vehicle, and in particular to such apparatus which is capable of increasing a steering force for thereby generating a certain difference in an operation force of a steering handle based on a running speed of a vehicle.

Generally, in a hydraulic pressure steering system which generates a steering force using a hydraulic device or actuator, an output shaft and steering handle which are connected with steering wheels are connected on the same axis. Therefore, when a steering torque is applied to the steering handle, a certain relative variation occurs between an input shaft and an output shaft based on a torsion of a torsion bar, so that hydraulic oil is applied to an operating chamber of the hydraulic device or actuator corresponding to the direction of a steering torque by a rotary valve between the input shaft and a valve body based on the relative variation.

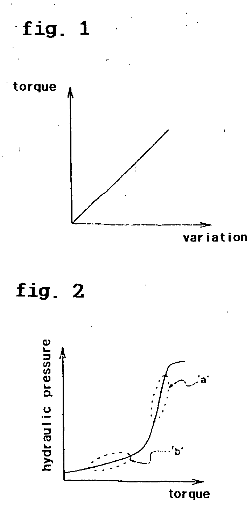

As shown in Figure 1, an interrelationship between a steering torque applied to the steering handle and a steering sub-force generated by a hydraulic device or actuator is determined based on a torsion characteristic of the torsion bar, so that as the variation is increased, the amount of the torque is increased. Therefore, since the variation of the hydraulic pressure with respect to the steering torque needs a large hydraulic pressure in the case that a vehicle is stopped and runs at a low speed, the characteristic of an interval "a" is used (see Figure 2), and in the case that the vehicle runs at an intermediate speed and high speed, since it is possible to steer using a small hydraulic pressure, the characteristic of an interval "b" in which a small hydraulic pressure is used is used.

However, when setting the value of the torque of the steering handle based on the stationary or a low speed running state with respect to the variation of the hydraulic pressure based on the variation of the torque, it is possible to steer using a very small torque in the case that the vehicle runs at a high speed which is undesirable in terms of steering accuracy when driving in a straight line. On the other hand, when setting the value of the torque of the steering handle to a large value based on an intermediate or high speed running state of the vehicle, it is difficult, if not impossible, to obtain enough steering sub-force.

Therefore, in the case that the vehicle is stationary or is driven at a low speed, by changing the slope of a variation graph of a torque with respect to a torsion variation of a torsion bar and a hydraulic pressure with respect to the torque in accordance with a running speed of the vehicle, a steering sub-force is increased using a small torque of the steering handle. In the case that the vehicle runs at an intermediate speed or high speed, a repelling force apparatus capable of increasing a steering repelling force is used. In this manner, the driver steering effort required to obtain a given level of power assist from the hydraulic device may be controlled.

A repelling force apparatus using an electric magnetic force is widely used for the above-described repelling force apparatus. A repelling force apparatus which uses the electric magnetic force is disclosed in the U.S Patent No. 5,119,898.

US Patent No. 5,119,898 discloses a vehicular power assist steering system wherein a pair of relatively rotatable hydraulic elements are connected between a driver manipulated steering shaft and a steering gear, the hydraulic elements being adapted to generate hydraulic flow for producing power assist steering force in relation to their relative rotation such that driver steering effort applied to the steering shaft produces a corresponding level of power assist steering force, the system including apparatus for varying the driver steering effort required to produce a given power assist steering force, said apparatus comprising:
- an annular stationary coil disposed within a stationary flux conducting element in proximity to said hydraulic elements;
- a cylindrical radially magnetized permanent magnet ring connected for rotation with one of said pair of hydraulic elements;
- outer and inner cylindrical magnetic flux conducting elements disposed in radial opposition about said permanent magnet ring to define outer and inner magnetic flux paths which, together with said stationary flux conducting element, couple said permanent magnet ring to said stationary coil, the inner and outer magnetic flux conducting elements each having a given number of teeth extending radially toward said permanent magnet ring, defining inner and outer magnetic air gaps between the permanent magnet ring and the inner and outer flux conducting elements, respectively; and
- coupling means for mutually coupling the inner and outer magnetic flux conducting elements for rotation with the other of said pair of hydraulic elements so that magnetic forces tending to center the permanent magnet ring within said inner and outer flux conducting elements also tend to centre said pair of hydraulic elements.

Such a system is hereinafter referred to as being "a vehicular power assist steering system as herein defined".

The steering force repelling apparatus is exemplified in US Patent No. 5,119,898 by way of an embodiment including a capsule type exciting coil 130, a cylindrical permanent magnet ring 104 and a pair of rotatable cylindrical ferromagnetic members 106 and 108. The cylindrical permanent magnetic ring 104 is fixed to a hub of a rotor installed at an outer portion of a sleeve for rotation with respect to a valve body. In addition, the rotatable cylindrical ferromagnetic members 106 and 108 are fixed at an inner portion of a spool shaft for a rotation together with the spool shaft.

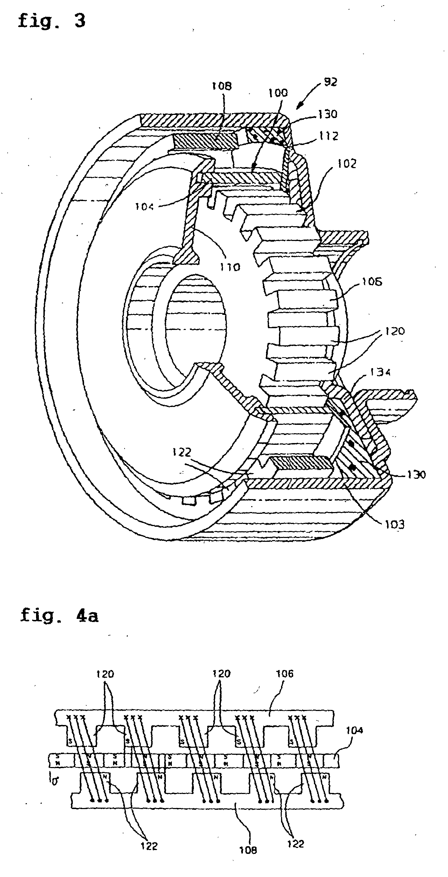

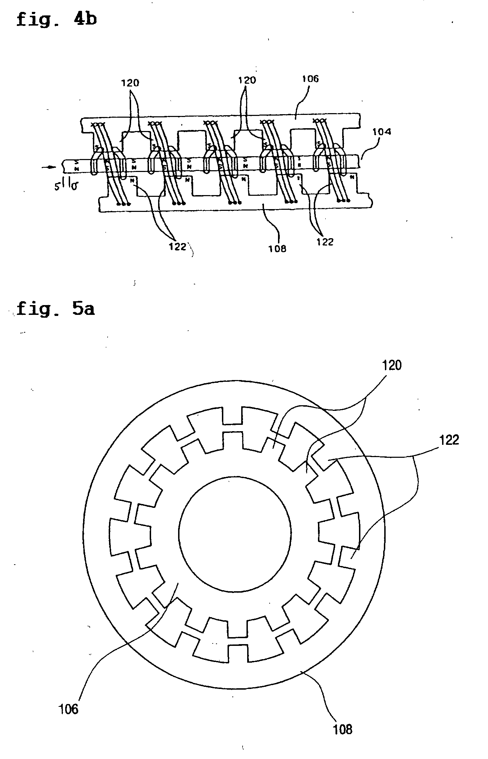

The cylindrical permanent magnetic ring 104 is extended in an axial direction, so that the magnetic poles are alternately formed in a radial direction. Figures 4A and 4B are views of a flow of a magnetic field of a rotary magnetic circuit in a conventional repelling force apparatus.

In a state that a steering operation force is not applied to a steering handle, the path of the magnetic flow is formed in a central alignment as shown in Figure 4A. However, when a steering operation force is applied to the steering handle, the cylindrical permanent magnet ring 104 is rotated based on the rotation of the valve body, so that the center of the magnetic flow path is distorted as shown in Figure 4B.

In the resulting distorted magnetic flow path, the cylindrical permanent magnet ring 104 tends to be moved to the original position by the central alignment recovering force. The above-described force is applied as a repelling force with respect to the steering sub-force. Therefore, it is possible to adjust the steering sub-force based on a magnetic field by adjusting an intensity of the central alignment recovering force generated by the capsule type exciting coil 130.

As shown in Figures 5A and 5B, the toothed portions 120 and 122 formed in the cylindrical rotational ferromagnetic members 106 and 108 are protruded in a rectangular shape and are opposite to each other. Therefore, under the operational force variation by the magnetic force, as shown in Figure 6, a straight line increase is implemented compared to the basic characteristic of the torsion bar. Therefore, as shown in Figure 7, as a certain torque is generated by rotating the steering handle, in the case that the characteristic of the valve does not have a non-sensitive portion in which the pressure of the value is generated, it is possible to obtain a variable characteristic of the pressure-to-torque.

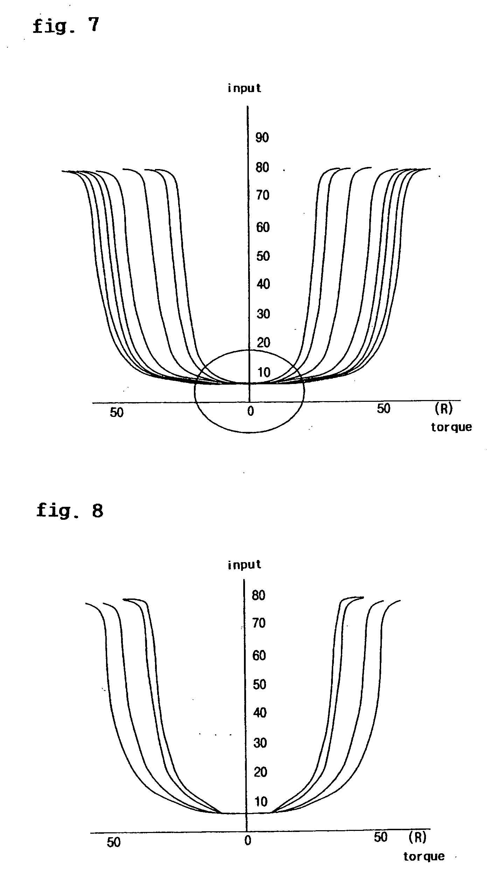

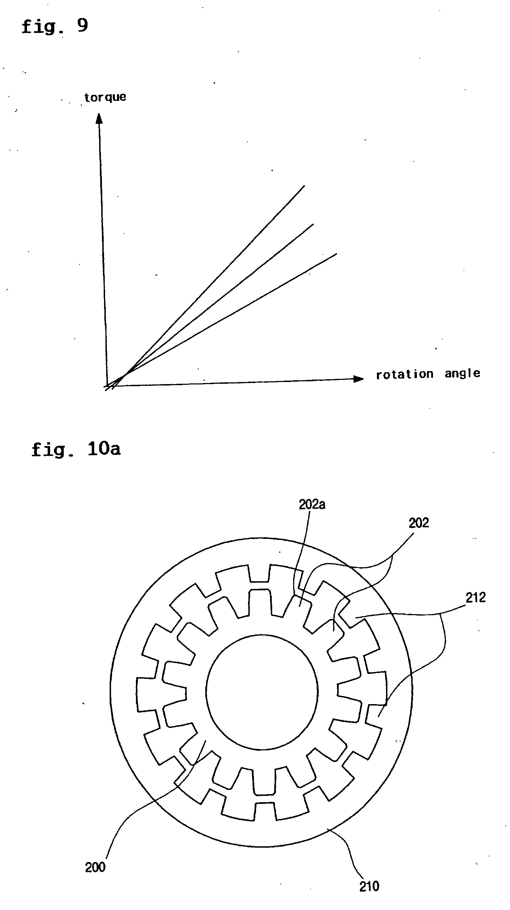

However, as shown in Figure 8, in the case that there is a non-sensitive portion in which there is not a variation in the pressure of the valve even when the torque is generated by rotating the steering handle, as shown in Figure 9, the non-sensitive portion of the valve characteristic is increased by a linear increase of the torque based on the torque generated by the variation of the torsion bar which is varied in accordance with the rotational angle of the steering handle.

An objective of the present invention to provide a repelling force apparatus of a power steering system for a vehicle which is capable of affording various type linear and/or non-linear characteristics in a state that the characteristic of a valve is varied based on a running speed of a vehicle.

According to the present invention there is provided repelling force apparatus in or for a power steering system for a vehicle, said apparatus comprising an exciting coil, a permanent magnet and a pair of rotatable ferromagnetic members each having a plurality of teeth arranged opposite each other based on 1:1, the teeth of at least one being of a generally trapezoid shape, and the sizes of the opposite surfaces of opposed teeth being different.

A taper, bevel or chamfer may be formed at both sides of one or more of the teeth of at least one set of generally trapezoid shaped teeth.

Additionally or alternatively, at least one set of the teeth may include one or more lengthened or shortened teeth so as to form at least one protrusion or groove on at least one side of the set of teeth.

At least one set of teeth may be aligned in an oblique or slanted fashion with respect to the associated rotatable member.

The present invention will now be described by way of example only with reference to the accompanying drawings without limitation to the scope of the present invention. In the drawings:
Figure 1 is a view illustrating a torsion characteristic with respect to a steeling torque in a conventional device;
Figure 2 is a view illustrating a variation of a hydraulic variation with respect to a steeling torque in a conventional device;
Figure 3 is a partially cut-away perspective view illustrating a construction of a conventional repelling force apparatus;
Figures 4A and 4B are views of a flow of a magnetic field of a rotary magnetic circuit in a conventional repelling force apparatus;

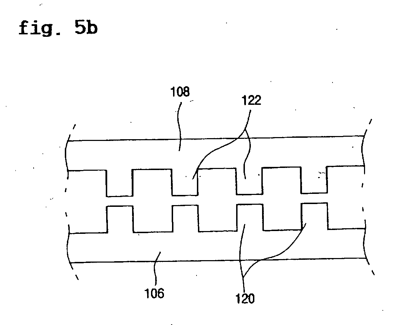

Figures 5A and 5B are a plan view and a plan exploded view illustrating a toothed portion formed in a pair of rotational hard members of a conventional repelling apparatus;

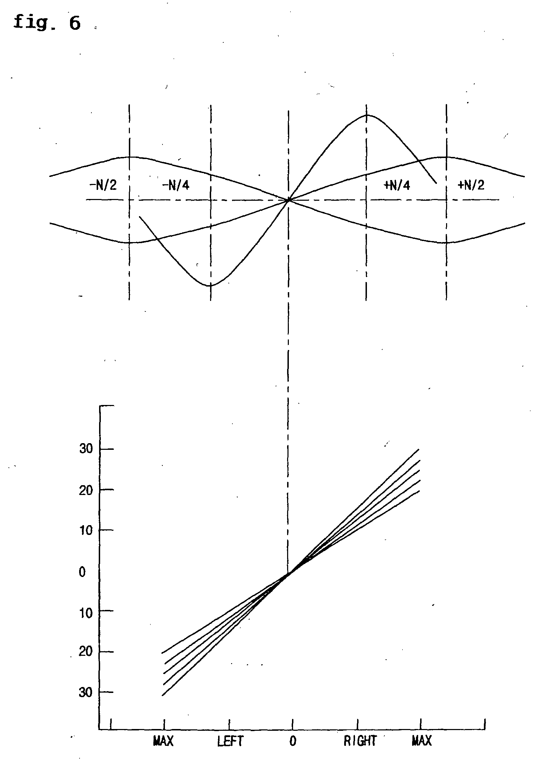

Figure 6 is a view illustrating a characteristic of a torsion bar with respect to a variation of an operational force based on a magnetic force in a conventional repelling force apparatus;
Figure 7 is a graph of a state that there is a non-sensitive portion in a characteristic of a conventional valve;
Figure 8 is a graph of a state that there is a sensitive portion in a characteristic of a conventional valve;
Figure 9 is a view illustrating a variation of a torque with respect to a rotational angle in a conventional art;

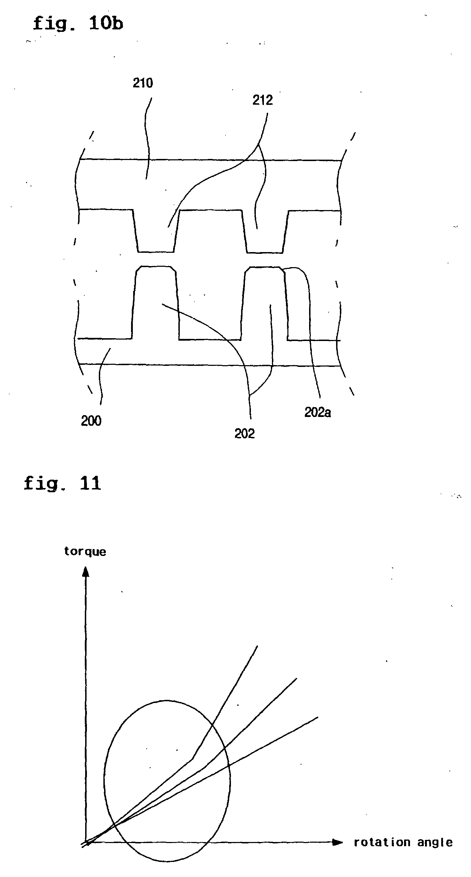

Figures 10A and 10B are a plan view and a plan exploded view illustrating a toothed portion formed in a pair of rotational ferromagnetic members in a repelling force apparatus according to an embodiment of the present invention;
Figure 11 is a view illustrating a variation of a torque with respect to a rotational angle of a steering handle in a system according to the present invention;

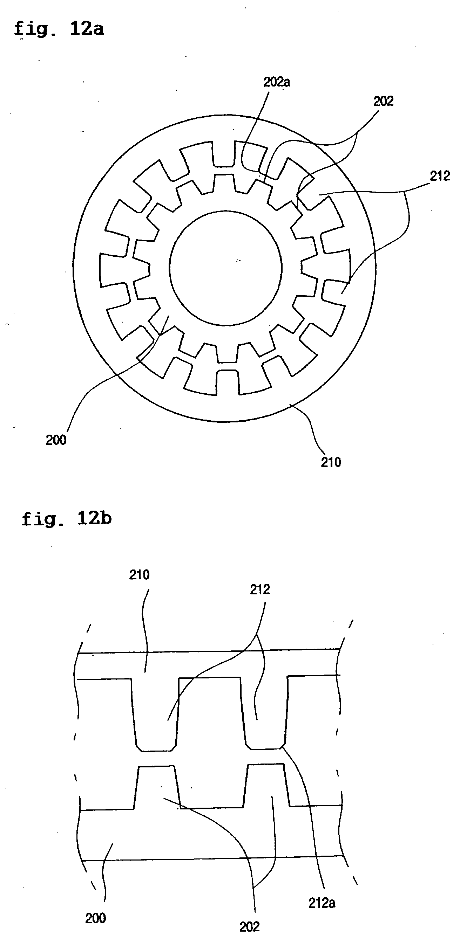

Figures 12A and 12B are respectively a plan view and a plan exploded view illustrating a toothed portion formed in a pair of rotational ferromagnetic members in a repelling force apparatus according to another embodiment of the present invention;

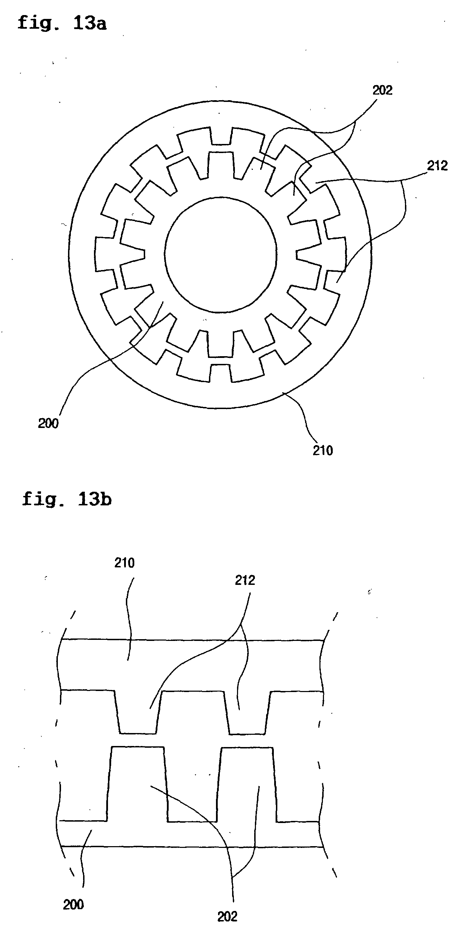

Figures 13A and 13B are respectively a plan view and a plan exploded view illustrating a toothed-portion formed in a pair of rotational ferromagnetic members in a repelling force apparatus according to still another embodiment of the present invention;

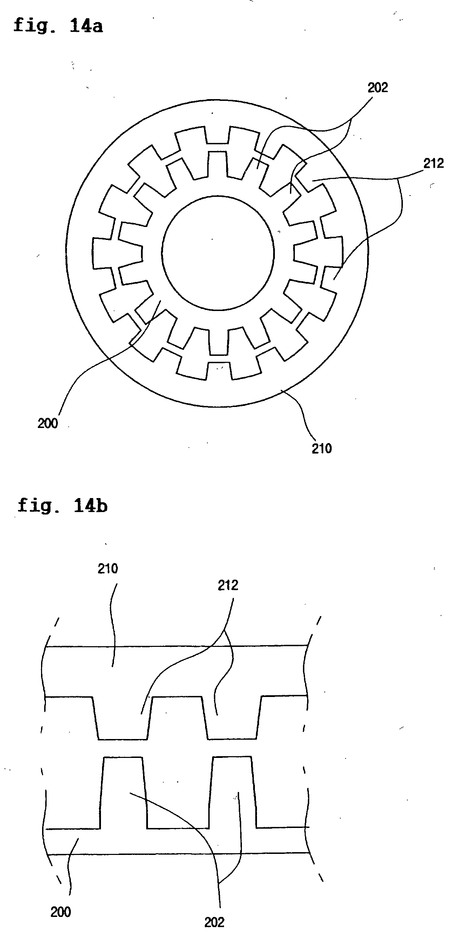

Figures 14A and 14B are respectively a plan view and a plan exploded view illustrating a toothed-portion formed in a pair of rotational ferromagnetic members in a repelling force apparatus according to yet another embodiment of the present invention; and

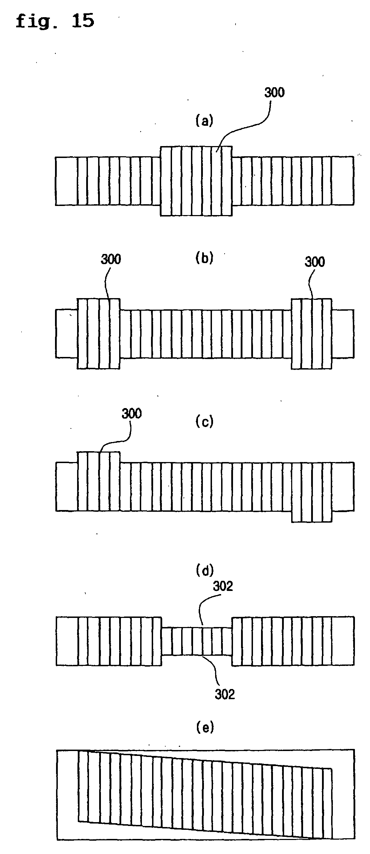

Figures 15A through 15E are exploded (linearised) diagrammatic views of further modifications in accordance with the present invention.

### DETAILED DESCRIPTION OF THE PREFERRED EMBODIMENTS

The repelling force apparatus of a power steering system for a vehicle according to the present invention will be explained with reference to Figures 10 through 15. It will be understood that these embodiments may be incorporated as modifications to a force repelling apparatus of the form disclosed in US Patent No. 5,119,898 (the entire contents of which are incorporated herein where the context admits) and, in particular, an embodiment such as that shown in Figures 3 to 5 of the accompanying drawings.

Referring to Figures 10A and 10B, these figures illustrate a modification applicable to Figure 3. In Figures 10A and 10B, the toothed rotatable cylindrical ferromagnetic members 200 and 210 correspond to the inner and outer rotatable toothed members shown in Figure 3. In the embodiment of Figures 10A and 10B, the teeth 202 and 212 are of generally trapezoid shape and are formed in the pair of cylindrical ferromagnetic members 200 and 210 and are disposed in a 1 to 1 relationship so that each tooth 202 is located opposite a corresponding tooth 212. As seen more clearly in Figure 10A, a taper 202a is formed at both sides of each trapezoid shaped tooth 202.

As shown in Figure 11, in a repelling force apparatus modified according to the embodiment of Figures 10A and 10B present invention, when rotating the steering handle, the torque is varied. In the case that there is a non-sensitive portion in the characteristic of the valve, the torque is increased by the minimized slope.

In the embodiment of Figures 12A and 12B (where the same reference numerals as used in Figures 10A and 10B are used to depict like parts), the taper 202a is not formed at both sides of the trapezoid shaped teeth 202 of the member 200; instead a taper 212a is formed at both sides of each trapezoid shaped tooth 212 of the member 210.

In the embodiments of Figures 10A, 10B and 11A, 11B, the sizes of the opposing surfaces of the teeth 202 and 212, especially in the widthwise direction, are rendered different by the presence of the tapers 202a. However, it is not essential to include the tapers 202a to achieve this difference in size. Thus, as shown in the embodiments of Figures 13A, 13B and 14A, 14B (where the same reference numerals as used in Figures 10A and 10B are used to depict like parts), the sizes of the opposite surfaces of the trapezoid shaped teeth 202 and 212 are made different without the provision of the tapering portions 202a.

Figures 15A through 15E are exploded views (i.e. linearised) illustrating the trapezoid shaped teeth 202 and 212 formed in the cylindrical rotatable ferromagnetic members 200 and 210 of the repelling apparatus according to the present invention.

In Figure 15A, one or more teeth of at least one set of the trapezoid shaped teeth 202 and/or 212 are extended for thereby forming a lateral protrusion or protrusions 300 at both sides of the set of teeth 202 and/or 212. In Figure 15B, one or more teeth formed at two (or more) locations among the set of teeth 202 and/or 212 are extended for thereby forming a lateral protrusion or protrusions 300 at both sides of the set of teeth 202 and/or 212. In Figure 15C, one or more teeth formed at two or more locations among the set of teeth 202 and/or 212 are extended in opposite directions for thereby forming a lateral protrusion or protrusions 300 at both sides. In Figure 15D, one or more teeth are shortened at one or more locations among the set of teeth 202 and/or 212 for thereby forming a groove 302 at one or both sides. In Figure 15E, the set of teeth 202 and/or 212 are formed so that they are aligned but extend in slanted or oblique fashion with respect to the associated rotatable member 200 and/or 210 carrying the same.

It will be appreciated that the sets of teeth 202, 212 in the embodiments of Figures 15A to 15E may, if desired, be modified in accordance with any one of the embodiments of the invention described above.

In each of the embodiments described above, it will be seen that the teeth 202, 212 are of generally trapezoid shape in that the flanks of the teeth are not parallel, i.e. each tooth generally has the configuration of a quadrilateral with two of its opposed sides or flanks being non-parallel. Usually the teeth are shaped so that the flanks are inclined so as to converge towards each other in a direction towards the end face of the tooth.

In each of the above embodiments of the invention, it is possible to increase the torque by the minimized slope in the case that there is a non-sensitive portion in the characteristic of the valve as the torque is varied when rotating the steering handle.

As described above, it is possible to increase by the minimized slope even when there is a non-sensitive portion in the characteristic of the valve so that the characteristic of the torque is varied based on a linear and/or non-linear characteristic in accordance with a rotation of the steering handle.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A repelling force apparatus in or for a power steering system for a vehicle, said apparatus comprising an exciting coil, a permanent magnet and a pair of rotatable ferromagnetic members each having a plurality of teeth arranged in opposed relation, the teeth of at least one of the ferromagnetic members being of a generally trapezoid shape, and the sizes of the opposite surfaces of opposed teeth being different.

2. Apparatus as claimed in Claim 1 in which the rotatable members comprise an inner member and an outer member.

3. Apparatus as claimed in Claim 2 in which the inner and outer members are of annular configuration.

4. Apparatus as claimed in Claim 2 or 3, wherein a taper, bevel or chamfer is formed at both sides of the generally trapezoid shape tooth of the inner member, so that the sizes of the opposite surfaces of the opposed teeth are different.

5. Apparatus as claimed in Claim 2, 3 or 4, wherein a taper, bevel or chamfer is formed at both sides of the trapezoid shape tooth of the outer member so that the sizes of the opposite surfaces of the same are different.

6. Apparatus as claimed in any one of Claims 2 to 5 wherein the sizes of the opposite surfaces are different by providing different slanted angles of the generally trapezoid shaped teeth of the inner member.

7. Apparatus as claimed in any one of Claims 1 to 6 wherein at least one set of said generally trapezoid shaped teeth includes a protrusion or protrusions extending laterally of the rotatable members.

8. Apparatus as claimed in Claim 7 in which at least one set of teeth has at least two protrusions at one or both sides thereof.

9. Apparatus as claimed in Claim 7 in which at least one set of teeth has at least two protrusions extending in opposite directions.

10. Apparatus as claimed in Claim 8 or 9 in which the protrusions are located at spaced positions along the set of teeth.

11. Apparatus as claimed in any one of the preceding claims wherein at least one set of the generally trapezoid shaped teeth includes one or more teeth which are shortened to form a groove or grooves in said set at one or both sides of the set.

12. Apparatus as claimed in any one of Claims 1 to 12 in which at least one set of said generally trapezoid shaped teeth are arranged so that they collectively extend in slanted fashion or obliquely with respect to the associated rotatable member.

13. Apparatus as claimed in any one of Claims 1 to 12, forming part of a vehicular power assist steering system as herein defined.
